# EUROPEAN PATENT SPECIFICATION

(11) **EP 0 342 140 B1**
(45) Date of publication and mention of the grant of the patent: **24.01.1996**
(21) Application number: 89480031.7
(22) Date of filing: 28.02.1989
(51) Int. Cl.: G06F 15/02

(54) **Method for presenting compressed electronic day calendar information in an interactive information handling system**
Verfahren zur Darstellung von komprimierter und elektronischer Tageskalenderinformation in einem interaktiven Informationsverarbeitungssystem
Méthode pour la représentation d'informations électroniques et comprimées d'un calendrier de jour dans un système interactif de traitement d'informations

(30) Priority: 02.05.1988 US 188927
(43) Date of publication of application: 15.11.1989
(73) Proprietor: International Business Machines Corporation, Armonk, N.Y. 10504 (US)
(72) Inventor: Strope, Gerald Clinton, Grapevine TX 76051 (US); Murray, Donna Fontaine, Euless TX 76039 (US)
(74) Representative: de Pena, Alain

(56) References cited:
- DE-A- 3 520 894
- US-A- 4 591 840
- RESEARCH DISCLOSURE, no. 276, April 1987, page 204, disclosure no. 27632; "Surrogate calendar keeper (calendar server)"

## Description

### Field of the Invention

This invention relates in general to electronic calendaring methods and in particular to a method of displaying compressed day calendar information simultaneously with data being displayed by a separate application program.

### Background Art

The prior art has disclosed a number and variety of interactive electronic calendaring systems and methods. The objective of all of these systems is primarily to assist the person who, for a number of different reasons, maintains a calendar of future events containing various information about the event at entry points on the calendar which relate to the time of the event.

The increase of personal computers and intelligent workstations in recent- years has made it possible for calendar owners to establish and maintain their calendars on these interactive type data processing systems.

Two general types of interactive electronic calendaring systems have thus evolved in the art. In one type of calendaring system, the owner of the calendar is generally also the user of the workstation and that workstation is generally not a part of a larger network. Generally, in these types of systems, the calendar functions involve presenting a screen to the user representing a day calendar divided into a number of time periods or time slots. Each period is capable of displaying a limited amount of text that the user enters. In some systems, the day calendar can scroll vertically to present more time periods to the user or horizontally to present longer text entries. The operator can generally "page" forward or backward and, in most arrangements, can display a requested date. These calendaring arrangements generally do not limit the type of event that is calendared nor the terminology employed at any of the entry points and, to that extent, function in the same manner as conventional manual calendars or appointment books. The electronic calendaring method and systems do have an advantage over the prior art manual calendaring of events in that the user generally has the ability to scan a time span involving a large number of days and identify calendared events quite rapidly.

The other type of calendaring arrangement that has developed in the prior art involves multiuser environments having a large number of terminals or workstations which are generally part of a larger communication network that has been established to permit the users to interact with each other and with data maintained on the data processing system. In this environment, a user at a terminal or workstation can send a message to one or more of the other users on the network and is notified when the addressees has received and read the message.

In both of the above environments there are two general formats employed for displaying calendar data related to a particular day. The first day calendar format comprises a plurality of time slots which are specifically identified as such on the screen. In this time structured format the period of the time slot for a particular application is fixed. In one application the time slot period may be fixed at 15 minutes. In another application the time slot period may be fixed at 30 minutes. Similarly the starting time and ending time for the day being displayed are generally pre-established in particular applications but different applications will have different starting and ending times for the calendar days. For example in one application the day calendar may cover 24 hours, i.e., 12:00 midnight to' 11:59 p.m. In another application the day calendar will cover only 12 hours, i.e., from 6:00 a.m. to 6:00 p.m.

Since most display screens of interactive terminals are limited to generally 80 columns of text per line and approximately 20 lines of text, most calendar applications cannot display, on one screen, the entire period representing one complete day of calendared events. As a result the day calendar is allowed to scroll vertically between the starting time slot and the ending time slot. As a result the user generally cannot determine what free time is available merely by a quick glance at the calendar screen. The calendar must be scrolled. In a scenario where the user is attempting to determine what day is available for a three hour meeting in the late afternoon, he must page through each day calendar and when the calendar has to be scrolled to see the late afternoon time slots, considerable time can be involved.

In addition, in most applications, since the descriptive area is generally limited to one line to permit a larger number of time slots to be displayed, the description of the event is generally very cryptic. While some applications allow for horizontal scrolling to permit less cryptic descriptions of calendar events to be entered, the general consensus in the art is that such an approach merely confuses the operator and while it may alleviate the problem of cryptic descriptions, it creates other problems of the same nature and magnitude.

The second format employed in other electronic calendaring methods does not structure the number of descriptive lines allocated to a time slot or a calendar event. In this later format, the operator enters the start time and the end time of the event in prescribed areas on the first line and then can enter as much text as necessary (within reason) to describe the event plus any comments, reminders, or directions that are appropriate. The next event is calendared before or after the first event depending on the time of the event and is also allowed as many lines as is necessary to describe that event. The main advantage of this second format is that the user feels less constrained and generally is not faced with the problem of deciphering some cryptic entry that was made a month earlier. In environments where a user is permitted to use another persons calendar, a higher level of understanding of the events that are calendared is also achieved.

There are of course some disadvantages because if there are a number of entries for the day, the available free time is not that readily discernible, but requires a rather concentrated scan of the starting and ending times of each entry to determine the length of free time that might be available between calendar units. Considerable more vertical scrolling time may also be involved depend ing on the number of events calendared and the levels at which they are described.

Users of electronic calendaring systems generally favor one format or the other and quite often management is reluctant to change from one format to the other, even though a newer electronic calendaring system having con siderable added function, may be available. The trauma for some users involved in the change of formatting ap proaches might discourage some from participating in the system.

Prior art includes DE-A-3 520 894 and US4,591,840:

The former discloses a calendaring application for display having at least two viewports, one wherein time periods are displayed in a time structured format, and a second one for related day calendar data.

The latter discloses a method of building a monthly calendar screen having abbreviated event descriptions directly translated from event descriptions on day screens.

The invention described in application Serial No. 89480014.3 is directed to a method of displaying to the user, calendar information in a manner that maintains the advantages of both formats so that prior users of either prior art format need not change their way of calendaring data but gain added advantages and functions over earlier prior art methods with which they are familiar.

A problem however, still exists for users of interactive terminals who maintain electronic calendars in that many users quite often are actively involved in a specific task on the terminal at the time they need to refer to their calendar. For example, the user may be actively involved in a task on his terminal, when (s)he remembers that there is a meeting scheduled sometime in the afternoon. The process for confirming the time for that meeting varies, depending on the sophistication of the particular electronic calendaring system and the operating system that is employed by the terminal. In some environments, the user may have to actually exit the application program that was active, call up the Calendar application program and access todays "day calendar" to confirm the time of the meeting. A similar number of steps are required to return to his point of departure in the application program.

In a more sophisticated environment, the user may be able to select a command, use a function key , or "hot key" to the calendar application and day calendar with a minimum of key strokes. However, if the user does not remember what that process is or executes it erroneously, productivity is adversely affected and the level of frustration of the user is increased. A number of other scenarios exist where it would be desirable to provide the terminal user with the ability to constantly display a compressed day format indicating at least his future "busy" and "free" periods, for viewing directly while another application is also displaying its information on the display screen. The present invention is directed to a method for use in an electronic calendaring application in which a compressed day calendar, indicating "busy times" during the current work day, is continually displayed to the user on the display screen of the terminal in a separate viewport simultaneously as the information being processed by the active application program is being displayed to the user in the main application viewport.

### Summary of the Invention

In accordance with the method of the present invention at least two separate viewports or windows are established on the screen. One viewport displays the information being processed by the active application program and is referred to as the application viewport. The other view port displays the user's day calendar in a compressed format and is referred to as the Compressed Day Calendar (CDC) viewport. The size of each viewport may be varied under the control of the user and so in practice the size of the CDC viewport will generally be determined primarily by the data display requirements of the active application program.

In the preferred embodiment, the CDC viewport has a width corresponding to one half of the display screen and is five display lines high. The condensed day calendar format therefore comprises a horizontal time line with appropriate indications of the various time slots that have been established on the user's main day calendar by the basic calendaring application. If the format of the user's main day calendar has established one-half hour time slots extending from 8:00 am to 5:00 pm, then the compressed format will display a horizontal time line with equally spaced vertical lines to indicate half-hour time slots. A second horizontal line, preferably underneath the time line, is used to appropriately label the indicated time slots.

The horizontal line immediately above the time line is employed to indicate time slots that have events calendared and is referred to as the "busy-bar" line . The indication employed on the "busy-bar" line is a horizontal bar which extends from the start time of the event to the end time of the event. The bars are generated automatically in accordance with the start and end time times of the events that have been calendared by the main calendaring application for the user.

The fourth display line immediately above the "busy-bar" line is referred to as the "conflict" line since it may be used to represent time slots during which two events have been scheduled and thus a schedule conflict exists for the user. A bar similar to the "busy-bars" is employed to represent the time slot(s) where a conflict exists. A second conflict line is also provided in the preferred embodiment which functions to indicate a time slot which has been calendared for three distinct events.

The present method further provides the user with an indication when another network user has just calendared an event on the first user's calendar. If the event just calendared is for the same day, i.e. today, a flashing "busy-bar" is displayed above the appropriate time slot on the time line. The user then has the option to view the event description immediately or at some future time. To view the event directly, a mouse selection cursor is positioned on the flashing bar, or a function key is operated which displays either a "pop-up" window continuing a description of the event or the uncompressed view of his day calendar maintained by the calendar application. If the event that was calendared is for a future day a separate flashing indicator is activated which operates like the flashing bar to display the details of the newly calendared event when the user selects this indicator.

It is therefore an object of the present invention to provide an improved electronic calendaring method for interactive display terminals.

Another object of the present invention is to provide an improved method for continuously displaying day calendar information on the screen of an interactive terminal.

A further object of the present invention is to provide a method for simultaneously displaying day calendar information in a useful compressed format simultaneously with data being displayed by an active application program.

A still further object of the present invention is to provide an improved method for displaying a compressed format day calendar in one viewport of the screen in which each time slot that is calendared has a busy-bar indicator displayed, and data from an application program is con currently displayed in another viewport of the screen

More particularly, the invention includes a method to display day calendar data maintained by an electronic calendaring application, on the display screen of an interactive information handling terminal, said method comprising in combination the sequential steps of:
creating first and second viewports for simultaneously displaying data from two independent data sources on said display screen,
displaying in said first viewport with an electronic calendaring application that maintains an electronic calendar for the user of said terminal, selected day calendar data which continuously indicates to said user at least which predetermined time periods are free and which predetermined time periods are busy during the current work day, and
displaying in said second viewport with a separate application program for displaying detailed information about said predetermined busy time periods,
wherein a bidirectional interaction is established between the two viewports in that:
indication of a new busy time period is automatically displayed in said first viewport when the user enters information in the second viewport, and
scrolling of the information to the relevant time period is automatically performed in the second viewport when the user edits a particular busy time period in the first viewport.

Objects and advantages other than those described above will become apparent from the following description of a preferred embodiment when read in connection with the drawing.

### Brief Description of the Drawing

Fig. 1 is a functional block diagram of a terminal of an interactive information handling system in which the method of the present invention may be advantageously employed.

Fig. 2 is a functional block diagram of a network of interconnected terminals of the type shown in Fig. 1.

Fig. 3 illustrates the Main Menu display screen of the interactive terminal shown in Fig. 1.

Fig. 4 illustrates the display screen presented in response to the user selecting the Calendar function on the Main Menu screen of Fig. 3.

Fig. 5 illustrates the data structure for storing the calendaring information in the system.

Fig. 6 illustrates the positioning on the display screen of the main viewport for displaying application data and the Compressed Day Calendar (CDC) viewport for displaying the compressed day calendar data.

Fig. 7 illustrates the details of the Compressed Day Calendar format that is displayed in the CDC viewport shown in Fig. 6.

### Description of the Preferred Embodiment:

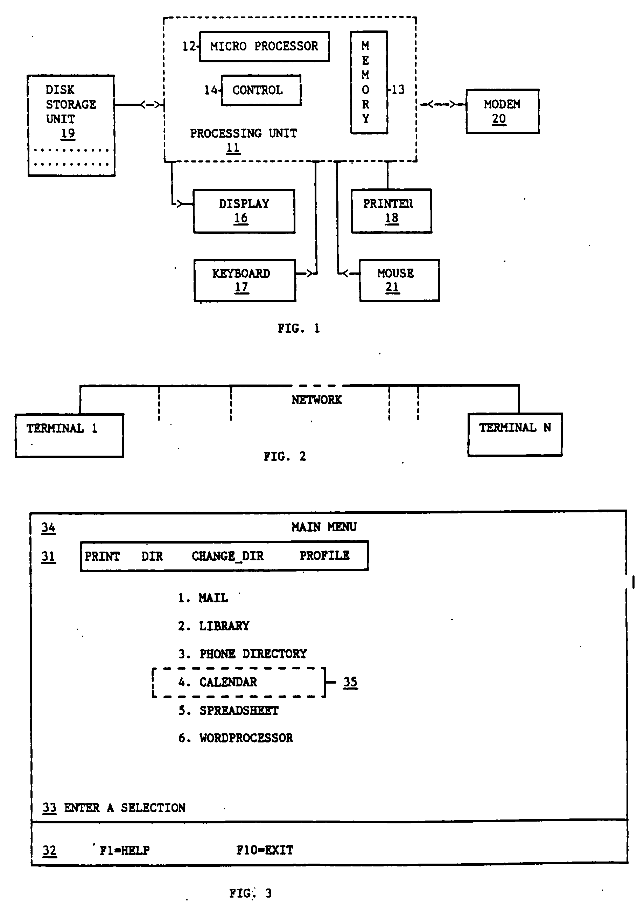

Fig. 1 illustrates the functional components of an interactive type data processing terminal on which the electronic calendaring method of the present invention may be advantageously employed. The terminal comprises a processing unit 11 which includes a microprocessor block 12, a semiconductor memory 13, and a control block 14 which functions to control input/output operations in addition to the interaction between the micro processor block 12 and the memory unit 13.

The terminal further includes a group of conventional peripheral units including a display device 16, a keyboard 17, a printer 18, a disk storage unit 19, and a modem 20. Since the details of the above-described functional blocks form no part of the present invention and can be found in the prior art, only a brief functional description of each block is set forth, along with a description of their interactions, sufficient to provide a person of ordinary skill in the art with a basis of understanding applicants' improved method for displaying electronic calendar data.

Processing unit 11 corresponds to the "system unit" of a personal computer system such as the IBM XT personal computer, IBM AT personal computer or PS/2 personal computer. Unit 11 is provided with an operating system program which may be one of the many versions of DOS (Disk Operating System) which is normally employed to run the systems. The operating system program is stored in memory 13 along with one or more application programs that the user has selected to run. Depending on the capacity of memory 13 and the size of the application programs, portions of these programs, as needed, may be transferred to memory 13 from the disk storage unit 19 which may include, for example, a 30 megabyte hard disk drive and a diskette drive. The basic function of the disk storage unit is to store programs and data that are employed by the system and which may readily be transferred to the memory unit 13 when needed. The function of the diskette drive is to provide a removable storage function for entering programs and data into the system, and a vehicle for storing data in a form that is readily transportable for use on other terminals or systems.

Display device 16 and keyboard 17 together provide for the interactive nature of the terminal, in that in normal operation, the interpretation that the system gives to a specific keystroke by the operator depends, in substantially all situations, on what is being displayed to the operator at that point in time.

In some situations, the operator, by entering commands into the system, causes the system to perform a certain function. In other situations, the system requests the entry of certain data, generally by displaying a prompt type of menu/message screen. The depth of the interaction between the operator and the system varies by the type of operating system and the application program, but is a necessary characteristic of terminals on which the method of the present invention may be employed.

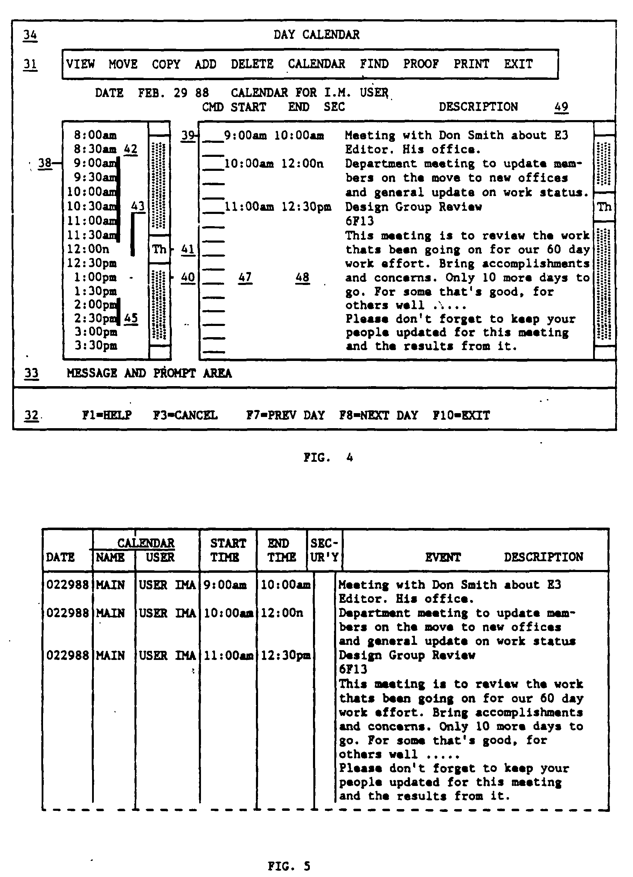

The terminal shown in Fig. 1 further includes a printer 18, which functions to provide hard copy output of data developed or stored in the terminal. The modem 20 functions to transfer data from the terminal of Fig. 1 to a host system through one or more communication links which may be a commercial type link or a dedicated communication link as shown schematically in Fig. 2. Lastly, a mouse 21 is provided to select items that are displayed by moving a selecting cursor that is displayed on the screen and is positional by the mouse.

Fig. 2 represents schematically a network of terminals of the type shown in Fig. 1 which have the ability to communicate with each other through the network. These networks generally include a Host processing system for storing data that is available to all terminals and is responsible for controlling and managing the network.

Fig. 3 is representative of the display panel that is presented to the user/operator immediately after the terminal is initialized. The content of this display screen is merely an example of the type of options that might be presented to the terminal user, and the overall functional areas of the screen which remain constant and are considered part of the user interface of the system.

It is assumed that the personal computer is provided with a display management system which uses a command or action bar for the selection of actions and a vertical scroll bar function which allows selected display screens to be scrollable under the control of a mouse.

The action bar portion of the screen shown in Fig. 3 is designated by referenced character 31. The commands that are shown for the panel are merely representative. The specific commands that are displayed on the action bar will vary depending on the information being displayed and the point in the task that is being performed.

The user interface screen may also include a function key area 32 which allows the operator to request predetermined tasks or actions. Generally the task assigned to a function key does not vary within a given application program or operating system. Some function keys have obtained a defacto standard such as function key F1 which is generally used to request the display of a "help" panel. A message area designated 33 may also be provided to display prompts or error messages from the system to the operator.

The top line 34 of the screen is used to designate the name of the application program and/or the screen name. In a multitasking system, an area may also be provided to indicate other tasks that are presently active which have been open and are executing in a background mode.

The Main Menu screen shown in Fig. 3 includes a number of application tasks which are selectable. Moving the cursor vertically to each line causes the task to be highlighted. Pressing the enter key, causes the highlighted task to be selected. Other selection techniques described in the prior art may also be employed.

In order to more readily understand the method of displaying day calendar data in a compressed format in accordance with the present invention, a brief description of one method of calendaring events in an electronic calendaring application will first be described. The electronic calendaring arrangement to be described corresponds generally to the arrangement described in application Serial No. 89480014.3. It is assumed for purposes of this description that the operator has just initialized the system and that the "Calendar" option 35 is selected. The screen shown in Fig. 4 is then displayed.

The screen shown in Fig. 4 comprises a pair of separate but functionally interrelated viewports or windows 38 and 39. It this respect it should be understood that the terminal is also provided with a state of the art program for establishing and maintaining a number of separate windows or viewports as determined by the user and the various application programs that are to be run. Viewports 38 and 39 are established in accordance with this "windowing" program.

Viewport 38 displays a time structured format in which each display line represents a fixed time period. The displayed format is developed independently of the windowing program. The area or space between a pair of horizontally adjacent lines is allocated to one time slot. As shown, each line or space between adjacent horizontal line represents a 30 minute time period or time slot. The height of the viewport 38 as shown, allows 16 time slots. The view-port therefore covers an eight hour period. Time slots prior to 8:00 a.m. and after 3:30 p.m. may be provided, if desired, in which case the information is scrollable to bring these time slots into view. In the preferred embodiment a vertical scroll bar 40, including a "thumb", "elevator" or "scroll box" 41, is provided at the right edge of the viewport to permit a scrolling operation employing mouse 21, which first selects the "thumb" with a mouse directed cursor and then drags the "thumb" up or down in a vertical direction by moving the mouse. This operation causes the time slots to scroll either up or down.

The third area 45 of the viewport is called the busy bar area. Its function is to map busy or committed time slots with a vertical busy bar which extends between the pair of horizontal lines that define the time slot. In practice, two separate busy bar columns 42, 43 are employed so that any potential scheduling conflicts can be indicated since the busy bars in each column will overlap for the conflict period in an horizontal direction. Other techniques, such as assigning a blinking attribute to the portion of the bar representing the conflict, may also be employed if horizontal space is at a premium.

Viewport 38 is also provided with its own cursor (not shown) such as a reversed video box. The width of the viewport 38 is approximately 15 display columns as shown .

The second viewport 39 is called the descriptive area and includes a Start time column 47, an End time column 48, and a descriptive area 49. The function of area 39 is to display information in detail about a scheduled event. The Start time of the event is entered in area 47 while the End time of the event is entered in area 48 and the text describing the event in the area 49. Area 49 does not, in theory, limit the amount of text that can be entered although in practice some practical maximum restraint, like 15 lines, may be imposed. It is important to note, that the number of text lines consumed by the description, are independent of the number of lines allocated to the time period scheduled for the event. For example, a description of an event scheduled for one hour, may take ten lines and a description for an event scheduled for an eight hour period may take one line.

The busy bars shown in the time structured format area 38 of Fig. 4 are directly related to the start and end times of the events that are entered in the descriptive area. For example, when the 10:00 am to 12:00 n event shown in Fig. 4 was entered into the system, the busy bar in column 42 was displayed. When the 11:00 am to 12:30 pm entry was entered, a bar was displayed in the second column 43 since there was a bar already in the first column. The fact that the entry was made in the second column and not the first, signifies that a scheduling conflict has occurred. The user can readily see the conflict since the bars in columns 42 and 43 overlap for the 11:00 am and 11:30 am time slots.

As shown in the drawing, a busy bar for a half-hour time slot begins at an imaginary horizontal line midway between the relevant displayed time and the immediately preceding displayed time. The bar ends at a similar horizontal line underneath the relevant displayed time.

As explained in the application Serial No. 89480014.3 selection of a time slot for either an initial calendar entry or an editing action on the description of an event that was previously calendared, results in automatic scrolling of the information in the descriptive area to position the appropriate line at some predetermined location on the screen. For example, that predetermined location may be the top line of the screen or a line immediately adjacent the time slot. Positioning a highlighting cursor on the 2:00 pm time slot and pressing the enter key, causes the information area to be scrolled and to place the 2:00 pm entry at the top of the descriptive area.

Fig. 5 represents one form of data structure for storing the information that has been entered into the system for the calendared events. This data structure is employed to build the screen shown in Fig. 4 and is involved in building the compressed format in accordance with the present invention. The specific details of time structured format shown in the viewport 38 is selected by the user. While the user's default selection as established in his profile will generally be employed at the time the system is IPLed, the selection may be modified at any time by appropriate action of the user in that the length of the work day can be increased and the time span or period of a time slot can be shortened or lengthened.

The busy time bars are mapped dynamically by a program that scans the data stored in the data structure shown in Fig. 5. A map similar to that shown in Table 1, below, is used to build the busy bar area of the screen of Fig. 4.

The rows of the map shown in Table 1 correspond to time slots that have been allocated in the time structured format of viewport 38. The columns designated 0 and 1, correspond to the two columns of busy bars shown in Fig. 4. As shown in Table 1, a third column may also be mapped if desired, since a column 2 is provided in the map.

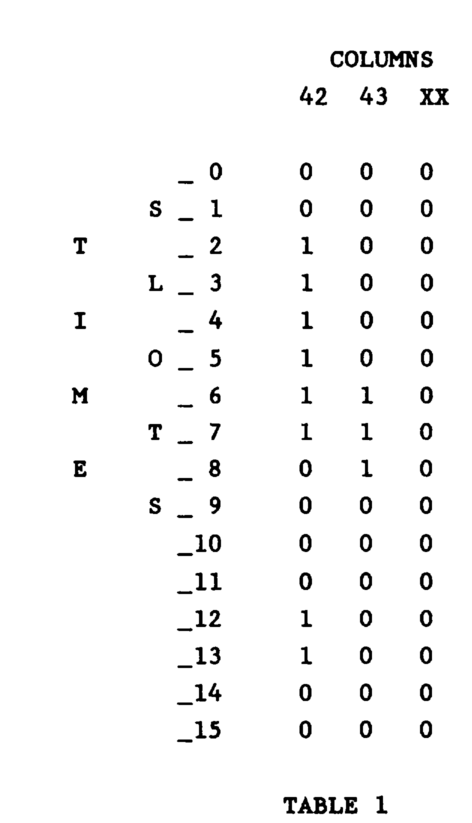

The following pseudocode statements will be of interest to programmers in developing a program to create the busy bars.

### MAIN ROUTINE

CONVERT TIMES TO 24 HOUR VALUES
SORT ENTRIES BY START TIME 1ST THEN END TIME
CLEAR BAR POSITION MAP
DO UNTIL ALL ENTRIES ARE DONE
READ ENTRY START TIME AND END TIME
CONVERT START AND END TIMES TO A BAR POSITION
CHECK MAP FOR USE OF BAR POSITION
DO WHILE BAR POSITION IN USE
MOVE OVER 1 COLUMN POSITION
CHECK BAR POSITION
END DO WHILE
CALL BAR ROUTINE WITH BAR POSITION
END OF DO UNTIL

### BAR ROUTINE

DRAW BAR
MARK BAR POSITION MAP WITH LOCATION OF NEW BAR

An example of a busy bar position map for the screen of Fig. 4 is shown in Table 1 . A 1 in column 0, at rows 2 - 7, and 12-13, and in column 1, rows 6 - 8 generates the busy bars shown in Fig. 4. This map is developed in accordance with the pseudo code listing set forth above and is used to build the busy bar section of the display that appears in viewport 38.

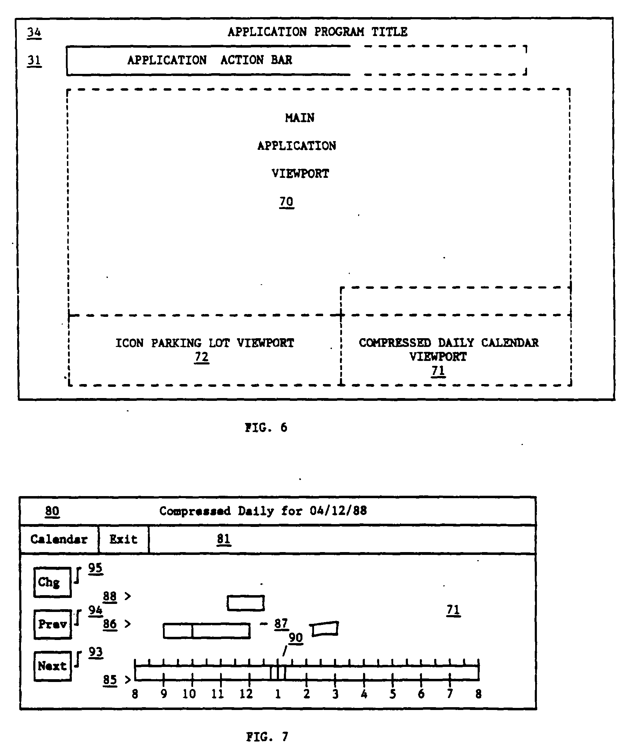

Fig. 6 illustrates the general layout of the screen that is presented to the terminal user with the method of the present invention. Fig. 6 for example would be presented to the user after he has selected an option from the Main Menu involving an application program such as the "Spreadsheet" option or the "Wordprocessor" option. In accordance with the method of the present invention, the screen is divided into at least a Main Application viewport and a Compressed Daily Calendar viewport. As shown in Fig. 6 the Main Application viewport 70 occupies a substantial portion of the screen while the CDC viewport 71 occupies the lower right hand corner of the screen. An Icon Parking Lot viewport 72 occupies the lower left hand corner of the screen. The dimensions of the respective viewports are variable in accordance with data provided to the windowing application program. In practice the size of the main application viewport is chosen to meet the users requirements for that application.

If, for example, the technology employed by the display provides a screen of 25 display lines and 80 columns the main application viewport 70 would be 20 by 80 while the CDC viewport 71 and Icon Parking Lot viewport 72 would each have a viewable area of 5 by 40. The actual size of the CDC viewport as shown is 7 by 40 with the top 2 lines being covered by bottom 2 lines of the viewport 70. The top two lines 80 and 81 as shown in Fig. 7 contain respectively the title of the data being displayed in viewport 71 and an action bar for selecting actions involving the information contained in this viewport. As in most windowing applications the covered portion of viewport 71 containing lines 80 and 81 can be uncovered by the user by, for example, selecting the bottom edge of viewport 70 with the mouse selecting cursor and dragging the an edge toward the top of the screen.

The CDC compressed format shown in Fig. 7 comprises a time slot line 85, which is appropriately labeled with times that correspond to the day calendar of the user and in which the time slot period also matches the time slot period of the user's day calendar. The format further includes a "Busy Bar" line 86 which functions to indicate those time slots which involve calendared events. A "Busy Bar" is positioned immediately above the time slot if it contains a calendared event. As shown the "Busy Bar" 87 extends from 9:00 am to 12:00 n which corresponds to the events shown in Fig.4 and Fig. 5. The format further includes a Conflict line 88 which functions to indicate when more than one event has been scheduled for the particular. As shown if Fig. 7 the fact that the user has a schedule conflict for the two time slot periods of 11:00 am to 12:00 n is indicated by "Busy Bar" 89. A second conflict line may also be provided in the format if desired.

The "Busy Bars" are developed for the CDC viewport in the same manner as described in connection with the viewport 38 of Fig. 4

As shown in Fig. 7 the format also provides the user with a "Time-of-Day" indicator 90 which moves along time line 85 under the control of the systems clock. This indicator would be a different color on a color monitor or be highlighted on a monochrome monitor.

The format further provides for the user to change from the current day to either a future day or a previous day. As shown in Fig. 7 the format includes a "Next" button 93 and "Prev"(ious) button 94. By positioning the selecting cursor of the mouse on one of these buttons and "clicking" the mouse the CDC viewport is updated with the next/previous day's calendar data. The date in the title line at the top of the viewport is also changed.

In a calendaring application involving a network of terminals as shown in Fig. 2 in which user are allowed to calendar events on each others calendar, the method of the present invention provides an indication in the CDC viewport that an event has been calendared since the time that the user last viewed his daily calendar. Two situations occur which in the preferred embodiment are treated somewhat differently.

The first situation addresses the scenario where the user is currently on line and another user has just calendared an event for later on in the day. In that situation A "Busy Bar" is displayed on line 86 or 88 of the CDC format but it is given at attribute to distinguish it from any previous "Busy Bars", such as a different color, a highlight, or a blinking attribute. The user can immediately cursor to that new "Busy Bar" and "click" the mouse to see his uncompressed day calendar as shown in Fig. 4 or merely ignore the new event until a more convenient time.

The second situation involves the scenario where the newly calendared event is on some future day. In this situation the indicator 95 labeled "Chg" in the upper right hand corner of viewport 71 as shown in Fig. 7 is turned on. In the preferred embodiment, when this indicator is turned on, it means that the user's calendar includes events that have been calendared since the time that the Compressed Day Calendar screen was displayed. By cursoring to this indicator and clicking the mouse, the user is presented with a list of newly calendared events and any calendared events that have been changed, for his review and further action. If desired, the on condition of the "Change" indicator could signify that a new event was calendared or an event changed, since either the end of the last terminal session or the beginning of the terminal session. This would require an assumption that the system would keep track of the last time that the user viewed the main calendar screens.

All of the above described activity on the part of the user need not be taken until it is convenient for the user to do so. The schedule and calendar information is presented to the user on a continuous basis along with the data that is being processed by an entirely separate application program. The user never has to exit from the application program to check his day calendar merely to understand what time is free or what time is busy.

## Claims

1. A method to display day calendar data maintained by an electronic calendaring application, on the display screen (16) of an interactive information handling terminal,said method comprising the following sequential steps in combination,
- creating first (38) and second (39) viewports for simultaneously displaying data from two independent data sources on said display screen,
- displaying in said first viewport with an electronic calendaring application that maintains an electronic calendar for the user of said terminal, selected day calendar data which continuously indicates to said user at least which predetermined time periods are free and which predetermined time periods are busy (42, 43, 45) during the current work day, and
- displaying in said second viewport with a separate application program for displaying detailed information (49) about said predetermined busy time periods,
said method being characterized in that a bidirectional interaction is established between the two viewports in that:
- indication of a new busy time period is automatically displayed in said first viewport when the user enters information in the second viewport, and
- scrolling of the information to the relevant time period is automatically performed in the second viewport when the user edits a particular busy time period in the first viewport.

2. The method recited in Claim 1 in which said step of displaying in said first viewport selected day calendar data includes the further step of displaying a plurality of preestablished sequential equal time periods.

3. The method recited in Claim 2 in which said further step of displaying, includes the step of displaying data defining said sequential time periods.

4. The method recited in Claim 3 in which said step of displaying said indication includes the further step of, displaying a bar adjacent said time period to provide said indication that said time period is busy.

5. The method recited in Claim 4, in which said electronic calendar application maintains a data structure for storing the start time and end time of each said event that has been calendared for said user and said step of displaying a bar adjacent said time slot includes the step of
- maintaining a bit map of time slots based on said start time and said end time of each said event, and
- developing each said bar that is displayed from said bit map.

6. The method recited in Claim 5 further including the step of, displaying a schedule conflict manifestation adjacent each said time period when a conflict exists between two or more calendared events for said each said time period.

7. The method set forth in Claim 6 in which a first said terminal is interconnected by a network to at least a second similar interactive terminal to permit the first terminal user to calendar an event on the second terminal user's calendar, including the step, displaying immediately to said user of said second terminal in said second view-port an indication that an event has just been calendared by another user on said network.

8. The method set forth in Claim 7 including the further step of, simultaneously displaying in said first viewport of said second terminal, data being processed by said second terminal for an unrelated application .

9. The method set forth in Claim 8 including the further step of, displaying a "Change" indicator in said second viewport to indicate that a new event has been calendared for the user of said second terminal since said second terminal was last connected to said network.

10. The method set forth in Claim 9 including the further step of, activating said "Change" indicator in said second viewport to indicate when a new event has been calendared and when an event has been changed.

11. The method set forth in Claim 10 including the further step of changing the day calendar data displayed in said second viewport from the current day to another day.

12. The method set forth in Claim 11 in which said step of changing includes the steps of,
- displaying in said second viewport a "next day" button" and a "previous day" button,
- positioning a selection cursor with a mouse to one of said buttons,
- clicking said mouse when said cursor is positioned on said one button, and
- displaying the day calendar data for either the next day or the previous day in accordance with the posi tion of said selection cursor when said step of clicking occurs.

13. The method set forth in Claim 3 including the further step of displaying the current time in said second viewport by providing a time indicator that is movable along said sequential time periods to indicate the current time.

## Patentansprüche

1. Verfahren zum Anzeigen von Tageskalenderdaten, die von einer elektronischen Kalenderanwendung verwaltet werden, auf dem Bildschirm (16) einer interaktiven Datenstation zur Informationsverarbeitung, wobei das Verfahren die folgenden sequentiellen Schritte in Kombination umfaßt
- Erzeugen erster (38) und zweiter (39) Darstellungsfelder zum gleichzeitigen Anzeigen von Daten von zwei unabhängigen Datenquellen auf dem Bildschirm,
- in dem ersten Darstellungsfeld mit einer elektronischen Kalenderanwendung, die einen elektronischen Kalender für den Nutzer der Datenstation verwaltet, Anzeigen ausgewählter Tageskalenderdaten, die dem Nutzer fortlaufend zumindest anzeigen, welche vorherbestimmten Zeitperioden frei sind und welche vorherbestimmten Zeitperioden (42, 43, 45) während des aktuellen Arbeitstages belegt sind, und
- in dem zweiten Darstellungsfeld mit einem getrennten Anwendungsprogramm zur Anzeige Anzeigen deteillierter Informationen (49) über die vorherbestimmten belegten Zeitperioden,
wobei das Verfahren dadurch gekennzeichnet ist, daß eine bidirektionale Interaktion zwischen den zwei Darstellungsfeldern aufgebaut wird, indem:
- ein Hinweis auf eine neue belegte Zeitperiode automatisch in dem ersten Darstellungsfeld angezeigt wird, wenn der Nutzer Informationen in das zweite Darstellungsfeld eingibt, und
- das Verschieben der Information zu der relevanten Zeitperiode in dem zweiten Darstellungsfeld automatisch ausgeführt wird, wenn der Nutzer eine spezielle belegte Zeitperiode in dem ersten Darstellungsfeld editiert.

2. Verfahren, wie in Anspruch 1 dargestellt, in dem der Schritt des Anzeigens ausgewählter Tageskalenderdaten in dem ersten Darstellungsfeld den weiteren Schritt des Anzeigens einer Vielzahl vorab festgelegter sequentieller gleicher Zeitperioden umfaßt.

3. Verfahren, wie in Anspruch 2 dargestellt, in dem der weitere Schritt des Anzeigens den Schritt des Anzeigens von Daten umfaßt, welche die sequentiellen Zeitperioden definieren.

4. Verfahren, wie in Anspruch 3 dargestellt, in dem der Schritt des Anzeigens des Hinweises den weiteren Schritt des Anzeigens eines Balkens neben der Zeitperiode umfaßt, um den Hinweis zu liefern, daß die Zeitperiode belegt ist.

5. Verfahren, wie in Anspruch 4 dargestellt, in dem die elektronische Kalenderanwendung eine Datenstruktur zum Speichern der Anfangszeit und der Endzeit jedes Ereignisses verwaltet, das für den Nutzer im Kalender erfaßt ist, und der Schritt des Anzeigens eines Balkens neben dem Zeitabschnitt den folgenden Schritt umfaßt
- Verwalten einer Bitmaske von Zeitabschnitten, basierend auf der Anfangszeit und der Endzeit jedes Ereignisses, und
- Entwickeln jedes Balkens, der von angezeigt wird, aus der Bitmaske.

6. Verfahren, wie in Anspruch 5 dargestellt, das weiterhin den Schritt des Anzeigens des Entstehens eines Zeitplankonfliktes neben jeder Zeitperiode umfaßt, wenn ein Konflikt zwischen zwei oder mehr im Kalender erfaßten Ereignissen für jene Zeitperiode besteht.

7. Verfahren, wie in Anspruch 6 dargelegt, in dem eine erste Datenstation durch ein Netzwerk mit mindestens einer zweiten ähnlichen interaktiven Datenstation verbunden ist, um dem Nutzer der ersten Datenstation zu gestatten, ein Ereignis in dem Kalender des Nutzers der zweiten Datenstation einzutragen, einschließlich des Schrittes, dem Nutzer der zweiten Datenstation in dem zweitem Darstellungsfeld unverzüglich einen Hinweis anzuzeigen, daß durch einen anderen Nutzer in dem Netzwerk gerade ein Ereignis im Kalender eingetragen wurde.

8. Verfahren, wie in Anspruch 7 dargelegt, einschließlich des weiteren Schrittes des gleichzeitigen Anzeigens von Daten, die von der zweiten Datenstation für eine unverknüpfte Anwendung verarbeitet werden, in dem ersten Darstellungsfeld der zweiten Datenstation.

9. Verfahren, wie in Anspruch 8 dargelegt, einschließlich des weiteren Schrittes des Anzeigens eines Indikators "Änderung" in dem zweiten Darstellungsfeld, um anzuzeigen, daß ein neues Ereignis für den Nutzer der zweiten Datenstation im Kalender eingetragen wurde, seit die zweite Datenstation zuletzt mit dem Netzwerk verbunden wurde.

10. Verfahren, wie in Anspruch 9 dargelegt, einschließlich des weiteren Schrittes des Aktivierens des Indikators "Änderung" in dem zweiten Darstellungsfeld, um anzuzeigen, wenn ein neues Ereignis im Kalender eingetragen wurde und wenn ein Ereignis verändert wurde.

11. Verfahren, wie in Anspruch 10 dargelegt, einschließlich des weiteren Schrittes des Änderns der in dem zweiten Darstellungsfeld angezeigten Tageskalenderdaten von dem aktuellen Tag zu einem anderen Tag.

12. Verfahren, wie in Anspruch 11 dargelegt, in dem der Schritt des Änderns die folgenden Schritte umfaßt
- in dem zweiten Darstellungsfeld Anzeigen eines Knopfes "nächster Tag" und eines Knopfes "vorheriger Tag",
- Positionieren eines Auswahlcursors mit einer Maus auf einem der Knöpfe,
- Klicken der Maus, wenn der Cursor auf jenen Knopf positioniert ist, und
- Anzeigen der Tageskalenderdaten entweder für den nächsten Tag oder den vorherigen Tag gemäß der Position des Auswahlcursors, wenn der Schritt des Anklickens stattfindet.

13. Verfahren, wie in Anspruch 3 dargelegt, einschließlich des weiteren Schrittes des Anzeigens der aktuellen Zeit in dem zweiten Darstellungsfeld durch Bereitstellen eines Zeitindikators, der entlang der sequentiellen Zeitperioden bewegt werden kann, um die aktuelle Zeit anzuzeigen.

## Revendications

1. Procédé destiné à afficher les données d'un calendrier du jour entretenu en fonctionnement par une application de calendrier électronique, sur l'écran d'affichage (16) d'un terminal interactif de manipulation d'informations, ledit procédé comprenant en combinaison les étapes séquentielles suivantes,
- créer une première (38) et une seconde (39) fenêtre de visualisation pour afficher simultanément les données à partir de deux sources de données indépendantes sur ledit écran d'affichage,
- afficher dans ladite première fenêtre de visualisation à l'aide d'une application de calendrier électronique qui entretient le fonctionnement d'un calendrier électronique pour l'utilisateur dudit terminal, les données du calendrier d'un jour sélectionné, lesquelles indiquent en permanence audit utilisateur au moins quelles périodes de temps prédéterminées sont libres et quelles périodes de temps prédéterminées sont occupées (42, 43, 45) pendant la journée de travail actuelle,
- réaliser un affichage dans ladite seconde fenêtre de visualisation à l'aide d'un programme d'application séparé pour afficher des informations détaillées (49) concernant lesdites périodes de temps occupées prédéterminées,
ledit procédé étant caractérisé en ce qu'une interaction bidirectionnelle est établie entre les deux fenêtres de visualisation en ce que :
- une indication de nouvelle période de temps occupée est automatiquement affichée dans ladite première fenêtre de visualisation lorsque l'utilisateur saisit les informations dans la seconde fenêtre de visualisation, et
- le défilement des informations de la période de temps pertinente est automatiquement réalisé dans la seconde fenêtre de visualisation lorsque l'utilisateur édite une période de temps occupée particulière dans la première fenêtre de visualisation.

2. Procédé selon la revendication 1, dans lequel ladite étape d'affichage dans ladite première fenêtre de visualisation des données du calendrier du jour sélectionné comprend l'étape supplémentaire d'affichage d'une pluralité de périodes de temps égales séquentielles préétablies.

3. Procédé selon la revendication 2, dans lequel ladite étape supplémentaire d'affichage comprend l'étape d'affichage des données définissant lesdites périodes de temps séquentielles.

4. Procédé selon la revendication 3, dans lequel ladite étape d'affichage desdites indications comprend l'étape supplémentaire consistant à afficher une barre contiguë à ladite période de temps afin de procurer ladite indication que ladite période de temps est occupée.

5. Procédé selon la revendication 4, dans lequel ladite application de calendrier électronique conserve une structure de données afin de mémoriser l'instant de début et l'instant de fin de chacun desdits événements qui ont été inscrits sur le calendrier pour ledit usager et ladite étape d'affichage d'une barre contiguë à ladite tranche de temps comprend l'étape consistant à
- conserver une topographie par bit des tranches de temps basée sur ledit instant de début et ledit instant de fin de chacun desdits événements, et
- développer chacune desdites barres qui sont affichées à partir de ladite topographie par bit.

6. Procédé selon la revendication 5 comprenant en outre l'étape consistant à afficher une manifestation d'un conflit de planification contigu à ladite période de temps lorsqu'un conflit existe entre deux événements inscrits sur le calendrier ou plus pour ladite chacune desdites périodes de temps.

7. Procédé selon la revendication 6, dans lequel un premier dit terminal est interconnecté par un réseau à au moins un second terminal interactif similaire afin de permettre à l'utilisateur du premier terminal d'inscrire sur le calendrier un événement sur le calendrier d'un utilisateur du second terminal, comprenant l'étape consistant à afficher immédiatement audit usager dudit second terminal dans ladite seconde fenêtre de visualisation une indication qu'un événement vient juste d'être inscrit sur le calendrier par un autre utilisateur dudit réseau.

8. Procédé selon la revendication 7 comprenant l'étape supplémentaire consistant à afficher simultanément dans ladite première fenêtre de visualisation dudit second terminal, des données traitées par ledit second terminal pour une application sans rapport.

9. Procédé selon la revendication 8 comprenant l'étape supplémentaire consistant à afficher un indicateur de "Modification" dans ladite seconde fenêtre de visualisation de façon à indiquer qu'un nouvel événement a été inscrit sur le calendrier pour l'utilisateur dudit second terminal depuis que ledit second terminal a été relié la dernière fois audit réseau.

10. Procédé selon la revendication 9 comprenant l'étape supplémentaire consistant à activer ledit indicateur de "Modification" dans ladite seconde fenêtre de visualisation de façon à indiquer lorsqu'un nouvel événement a été mis sur le calendrier et lorsqu'un événement a été modifié.

11. Procédé selon la revendication 10 comprenant l'étape supplémentaire consistant à modifier des données du calendrier d'un jour affichées dans ladite seconde fenêtre de visualisation à partir du jour actuel vers un autre jour.

12. Procédé selon la revendication 11 dans lequel ladite étape de modification comprend les étapes consistant à,
- afficher dans ladite seconde fenêtre de visualisation un bouton "jour suivant" et un bouton "jour précédent",
- positionner un curseur de sélection à l'aide d'une souris sur l'un desdits boutons,
- cliqueter ladite souris lorsque ledit curseur est positionné sur ledit un bouton, et
- afficher les données du calendrier d'un jour soit pour le jour suivant, soit pour le jour précédent en conformité avec la position dudit curseur de sélection lorsque ladite étape de cliquetage se produit.

13. Procédé selon la revendication 3 comprenant l'étape supplémentaire consistant à afficher l'heure en cours dans ladite seconde fenêtre de visualisation afin de procurer un indicateur d'heure qui soit mobile suivant lesdites périodes de temps séquentielles pour indiquer l'heure en cours.
